# EUROPEAN PATENT SPECIFICATION

(11) **EP 4 129 814 B1**
(45) Date of publication and mention of the grant of the patent: **06.05.2026**
(21) Application number: 21780949.0
(22) Date of filing: 29.03.2021
(51) Int. Cl.: B63B 25/08, B63B 25/16, B63B 27/24, F17C 3/08

(54) **LIQUEFIED GAS STORAGE SHIP**
FLÜSSIGGASSPEICHERSCHIFF
NAVIRE DE STOCKAGE DE GAZ LIQUÉFIÉ

(30) Priority: 30.03.2020 JP 2020061456
(43) Date of publication of application: 08.02.2023
(73) Proprietor: KAWASAKI JUKOGYO KABUSHIKI KAISHA, Kobe-shi, Hyogo 650-8670 (JP)
(72) Inventor: URAGUCHI, Ryosuke, Kobe-shi, Hyogo 650-8670 (JP); KAWASUJI, Yusaku, Kobe-shi, Hyogo 650-8670 (JP); IZUMI, Naruyoshi, Kobe-shi, Hyogo 650-8670 (JP); IMAI, Tatsuya, Kobe-shi, Hyogo 650-8670 (JP); SHIMOGAKI, Takashi, Kobe-shi, Hyogo 650-8670 (JP); MATSUMOTO, Akira, Kobe-shi, Hyogo 650-8670 (JP)
(74) Representative: Arnold & Siedsma
(86) International application number: PCT/JP2021/013313
(87) International publication number: WO 2021/200829

(56) References cited:
- EP-B1- 2 682 337
- JP-A- 2003 517 390
- JP-A- 2004 028 238
- JP-A- 2011 007 320
- JP-A- H05 157 197
- JP-B2- 6 134 211
- KR-A- 20200 012 566
- US-A- 3 397 662
- US-A- 3 820 491
- US-A- 3 851 611

## Description

### CROSS REFERENCE TO THE RELATED APPLICATION

This application is based on and claims Convention priority to Japanese patent application No. 2020-061456, filed March 30, 2020.

### BACKGROUND OF THE INVENTION

### (Field of the Invention)

The present invention relates to a liquefied gas storage ship, which is a ship having function of storing liquefied gases.

### (Description of Related Art)

In conventional liquefied gas storage ships (for example, liquefied gas carrier ships) that stores liquefied gases such as liquefied natural gas or liquefied hydrogen, pipes such as liquefied gas transport pipes are collectively mounted to a dome part, which protrudes upward from a tank body, inside a tank and penetrate the dome part to extend to an outside of the tank (see, for example, Patent Document 1.). Generally, the portion of the pipes extending outside the tank is supported by a support structure body attached to a hull such as a tank cover. Patent Document 2 discloses a liquefied gas carrier tank that includes a tank main body portion and a tank dome to which a plurality of pipes are attached through which a liquefied gas is supplied to and discharged from the tank main body portion.

### [Related Document]

### [Patent Document]

[Patent Document 1] JP Laid-open Patent Publication No. 2019-157868
[Patent Document 2] European Patent No. 2682337

### SUMMARY OF THE INVENTION

However, where the support structure body is fixed to the hull rather than to the tank, large relative displacement occurs between a leading portion of the transport pipe on the tank side and the support structure body for the transport pipe on the hull side due to deformation and/or rocking motion of the hull, expansion and contraction of the tank caused by the storage of low-temperature liquefied gas, and the like. Such large relative displacement will cause bending stress to be applied to the pipe.

In order to solve the above problem, an object of the present invention is to suppress relative displacement between a pipe penetrating a dome part of a tank and a structure body supporting the pipe in a liquefied gas storage ship.

In order to achieve the above object, the present invention provides a liquefied gas storage ship including:
a hull;
a tank that is installed in the hull and stores liquefied gas, the tank including a dome part protruding upward;
a transport pipe for transporting the liquefied gas between an inside and an outside of the tank, the transport pipe extending from the inside of the tank through the dome part to the outside of the tank; and
a support structure body that is fixed to the dome part and supports a portion of the transport pipe extending to the outside of the tank, wherein the support structure body includes: an attachment part which is located at a lowermost part of the support structure body and is fixed to the dome part, a mount part of a flat plate-like shape which is located at an uppermost part of the support structure body and on which the portion of the pipe extending to the outside of the tank is mounted, and a support part which is located between the attachment part and the mount part to connect and support the mount part with respect to the attachment part.

According to this configuration, the support structure body that supports the pipe is mounted to the dome part of the tank to which the pipe is attached. Therefore, relative displacement between the pipe and the support structure body can be significantly suppressed, as compared with the case where the support structure body is mounted to the tank cover or the like of the hull.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,
Fig. 1 is a side view schematically showing a configuration of a liquefied gas storage ship according to one embodiment of the present invention;
Fig. 2 is a cross-sectional view along line II-II in Fig. 1;
Fig. 3 is a cross-sectional view showing a surrounding area of the dome part of Fig. 2 in an enlarged scale; and
Fig. 4 is a plan view showing a support structure body used in the liquefied gas storage ship shown in Fig. 1.

### DESCRIPTION OF THE EMBODIMENTS

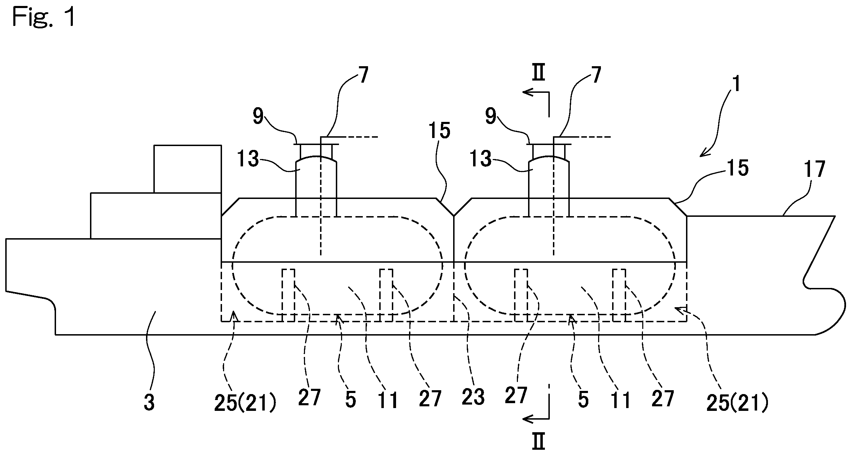

Hereinafter, one preferable embodiment of the present invention will be described with reference to the drawings. Fig. 1 shows a liquefied gas storage ship 1 according to one embodiment of the present invention. The liquefied gas storage ship 1 includes a hull 3 that floats on water, a tank 5 that is installed in the hull 3 for storing liquefied gas, a pipe that is mounted to the tank 5 (in this example, a transport pipe 7 for transporting the liquefied gas between the inside and the outside of the tank 5), and a support structure body 9 that supports a portion of the transport pipe 7 extending to the outside of the tank 5.

In this specification, the term "liquefied gas storage ship" refers to a ship having a function of storing liquefied gas. The liquefied gas storage ship 1 in the present embodiment is a liquefied gas carrier ship. However, in addition to the liquefied gas carrier ship, the liquefied gas storage ship also includes, for example, a liquefied gas fuel ship, a bunkering ship that supplies liquefied gas to other ships, and the like.

In this embodiment, two tanks 5 are installed in the hull 3 of the liquefied gas storage ship 1. These two tanks 5 are arranged in the ship length direction of the hull 3. However, the number of tanks 5 mounted in the hull 3 may be one, or three or more. Since the configuration of the tanks 5 may be the same, only one of the tanks 5 will be described in this specification.

The liquefied gas stored in the tank 5 may be, for example, liquefied petroleum gas (LPG, about -45°C), liquefied ethylene gas (LEG, about -100°C), liquefied natural gas (LNG, about -160°C), liquefied hydrogen (LH₂, about -250°C), and liquefied helium (LHe, about -270°C). In this embodiment, liquefied hydrogen is stored in the tank 5.

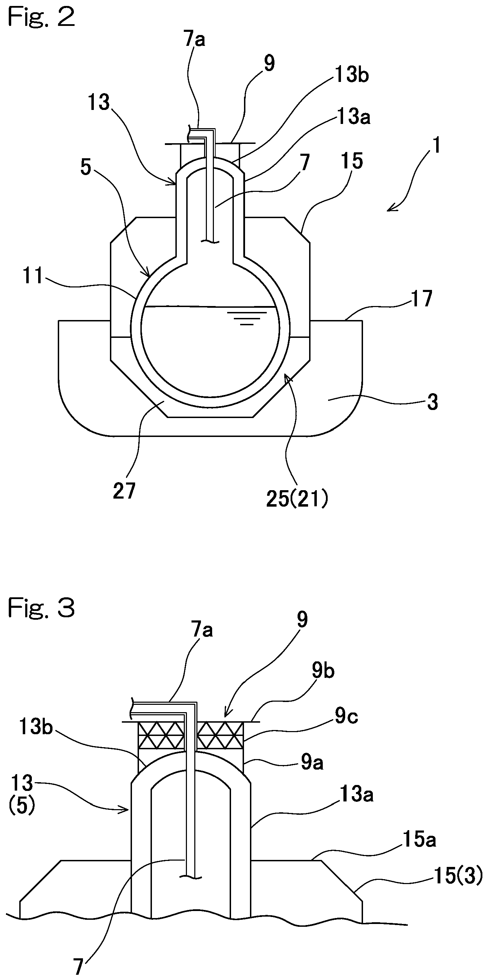

In the present embodiment, as shown in Fig. 2, the tank 5 is configured as a double-shell tank 5 including an inner shell and an outer shell. For example, there is a vacuum thermal insulation layer between the inner shell and the outer shell. However, the configuration of the tank 5 is not limited to this example. For example, the tank 5 may be a single-shell tank 5 covered by a heat insulating material. The heat insulating material may include, for example, a plurality of vacuum heat insulating panels or a plurality of foam panels.

The tank 5 includes a portion exposed upward from the hull 3, and at least the portion is attached to the hull 3 in a displaceable manner. Specifically, in the present embodiment, the tank 5 includes a main body part 11 which is a part for accommodating the liquefied gas, and a dome part 13 protruding upward from the main body part 11. The main body part 11 is covered by the hull 3. In this example, the main body part 11 is covered by a tank cover 15. Specifically, the tank cover 15 is fixed to the upper deck 17, which is a part of the hull 3, so as to be substantially immovable relative to the upper deck 17. Therefore, the tank cover 15 is also formed as a part of the hull 3. The tank cover 15 includes a top wall formed with an opening through which the dome part 13 is inserted. Through the opening of the tank cover 15, the dome part 13 protrudes above the tank cover 15, that is, the dome part 13 is exposed upward from the tank cover 15.

In the present embodiment, with such a configuration, the tank 5 includes a portion exposed upward from the hull 3 (in this example, the upper portion of the dome part 13). In the illustrated example, the protruding direction of the dome part 13 is substantially parallel to the vertical direction. The protruding direction, however, may be slightly inclined with respect to the vertical direction. Further, in this example, as shown in Fig. 1, the main body part 11 has a cylindrical shape extending in the horizontal direction. However, the shape of the main body part 11 is not limited to this example and may be, for example, a spherical shape or a rectangular parallelepiped shape.

The hull 3 is formed with a recess 21 in which the tanks 5 are installed. The recess 21 is divided into two cells 25 by a partition wall 23 between the tanks 5. On a bottom wall of each cell 25, a pair of saddles 27 are disposed which support the main body part 11 at positions separated from each other in the axial direction of the main body part 11. Each saddle 27 projects from the bottom wall. The tank 5 is supported on the saddles 27 so as to be separated from each wall forming the cell 25 of the hull 3. In the present embodiment, with such a configuration, the tank 5 is attached to the hull 3 such that the portion of the tank 5 exposed upward from the hull 3 (in this example, the upper portion of the dome part 13) is displaceable relative to the hull 3.

As shown in Fig. 3, the dome part 13 includes a side wall 13a of a cylindrical shape extending substantially in the vertical direction, and a lid 13b of a substantially hemispherical shape that closes an upper opening of the side wall 13a. The dome part 13 is attached with a plurality of transport pipes 7 for transporting (loading and unloading) liquefied gas to the tank 5. In the figure, only one transport pipe 7 is shown for the sake of simplicity. The transport pipe 7 extends from the inside of the tank 5 to the outside of the tank 5 through the dome part 13. In the following description, a portion of the transport pipe 7 extending to the outside of the tank 5 may be particularly referred to as a "transport pipe outer portion 7a". In the present embodiment, the transport pipe 7 penetrates the lid 13b of the dome part 13 in the substantially vertical direction. Further, in this example, the transport pipe 7 is formed as a double pipe. However, the transport pipe 7 may be a single pipe. A valve (not shown) for controlling the flow of liquefied gas is provided in the transport pipe outer portion 7a.

In the present embodiment, the above-mentioned transport pipe 7 will be described as an example of the pipe extending to the outside of the tank 5 through the dome part 13. However, examples of the pipe having such a configuration may include various types of pipes, such as a transport pipe for vaporized gas.

The dome part 13 is displaced downward with respect to the tank cover 15 due to thermal contraction of the tank 5. The dome part 13 is connected to the tank cover 15 by a non-illustrated support structure body.

In the present embodiment, the support structure body 9 that supports the transport pipe outer portion 7a is fixed to the dome part 13 of the tank 5. In other words, the support structure body 9 is attached to the dome part 13 of the tank 5 so as to be substantially immovable relative to the dome part 13. Specifically, in the illustrated example, the support structure body 9 is fixed on the lid 13b of the dome part 13.

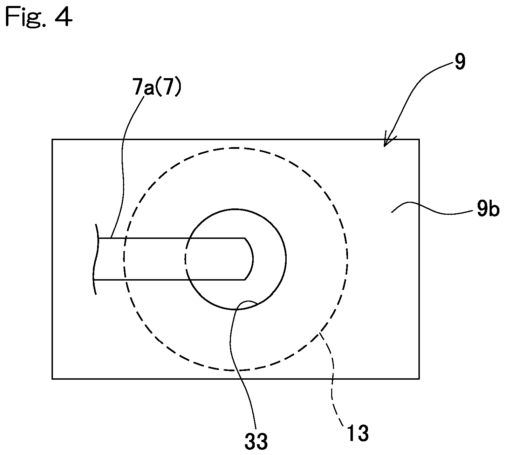

The support structure body 9 includes an attachment part 9a which is located at the lowermost part and is fixed to the dome part 13, a mount part 9b of a flat plate-like shape which is located at the uppermost part and on which the transport pipe outer portion 7a is mounted, and a support part 9c which is located between the attachment part 9a and the mount part 9b to connect and support the mount part 9b with respect to the attachment part 9a. As shown in Fig. 4, the mount part 9b is formed with an insertion opening 33 for inserting the transport pipe 7. In the illustrated example, the insertion opening 33 is formed in a central portion of the mount part 9b. However, the position at which the insertion opening 33 is formed in the mount part 9b is not limited to this example. Provision of the insertion opening 33 in the mount part 9b of the support structure body 9 can simplify the arrangement configuration of the transport pipe outer portion 7a. However, it is not essential to form the insertion opening 33 in the mount part 9b.

In the present embodiment, the mount part 9b of the support structure body 9 includes a region protruding with respect to the dome part 13 in a plan view. Specifically, in the illustrated example, the mount part 9b of the support structure body 9 completely covers the dome part 13 in a plan view. However, only a part of the mount part 9b may have a region protruding with respect to the dome part 13 in a plan view. This configuration can secure freedom in the arrangement configuration of the transport pipe outer portion 7a. However, it is not essential for the mount portion 9b to include a region protruding with respect to the dome part 13 in a plan view.

In this embodiment, the entire support structure body 9 is made of low temperature steel (steel for low temperature applications). Alternatively, at least the attachment part 9a of the support structure body 9 shown in Fig. 3 may be made of low temperature steel. With this configuration, the strength is ensured even when the temperature of the attachment part 9a of the support structure body 9 becomes low due to the influence of the tank that stores the liquefied gas. Examples of the low temperature steel used for the support structure body 9 may include, but are not limited to, austenitic stainless steel. However, it is not essential to make the support structure body 9 from low temperature steel.

In this embodiment, at least a part of the support structure body 9 (a support portion 9c in this example) has a truss structure. The truss structure may be employed only in a part of the support portion 9c, or may be employed in another part of the support structure body 9. According to this configuration, the strength of the support structure body 9 installed in the limited area above the dome part 13 can be ensured, and the transport pipe 7 can be reliably supported. However, it is not essential for the support structure body 9 to have the truss structure.

As long as the support structure body 9 is fixed to the dome part 13 of the tank 5, that is, as long as the support structure body 9 is attached to the dome part 13 of the tank 5 so as to be substantially immovable relative to the dome part 13, the support structure body 9 may be attached to a portion other than the portion on the lid 13b.

According to the liquefied gas storage ship 1 of the present embodiment described above, the support structure body 9 that supports the pipe (transport pipe 7) is mounted to the dome part 13 of the tank 5 to which the transport pipe 7 is attached. Therefore, relative displacement between the transport pipe 7 and the support structure body 9 can be significantly suppressed as compared with the case where the support structure body 9 is mounted to the tank cover 15 or the like of the hull 3.

The type of the tank 5 included in the liquefied gas storage ship 1 is not limited to the above-described type of the independent tank 5.

Although the present invention has been described in terms of the preferred embodiments thereof with reference to the drawings, various additions, modifications, or deletions may be made without departing from the scope of the invention. Accordingly, such variants are included within the scope of the present invention.

### [Reference Numerals]

- 1: liquefied gas storage ship
- 3: hull
- 5: tank
- 7: transport pipe (pipe)
- 7a: transport pipe outer portion
- 9: support structure body
- 13: dome part

## Claims

1. A liquefied gas storage ship (1) comprising:
a hull (3);
a tank (5) that is installed in the hull (3) and stores liquefied gas, the tank (5) including a dome part (13) protruding upward;
a pipe (7) extending from an inside of the tank (5) through the dome part (13) to an outside of the tank (5); and
a support structure body (9) that is fixed to the dome part (13) and supports a portion (7a) of the pipe (7) extending to the outside of the tank (5),
**characterized in that** the support structure body (9) includes:
an attachment part (9a) which is located at a lowermost part of the support structure body (9) and is fixed to the dome part (13),
a mount part (9b) of a flat plate-like shape which is located at an uppermost part of the support structure body (9) and on which the portion (7a) of the pipe (7) extending to the outside of the tank (5) is mounted, and
a support part (9c) which is located between the attachment part (9a) and the mount part (9b) to connect and support the mount part (9b) with respect to the attachment part (9a).

2. The liquefied gas storage ship as claimed in claim 1, wherein at least a portion (9a) of the support structure body (9) which is fixed to the dome part (13) is made of low temperature steel.

3. The liquefied gas storage ship as claimed in claim 1 or 2, wherein the support structure body (9) has a truss structure at least in part.

4. The liquefied gas storage ship as claimed in any one of claims 1 to 3, wherein the mount part (9b) includes a region protruding with respect to the dome part (13) in a plan view.

5. The liquefied gas storage ship as claimed in any one of claims 1 to 4, wherein the mount part (9b) is formed with an insertion opening (33) through which the pipe (7) is inserted.

## Patentansprüche

1. Flüssiggaslagerschiff (1), umfassend:
einen Rumpf (3);
einen Tank (5), der in dem Rumpf (3) eingebaut ist und Flüssiggas lagert, wobei der Tank (5) ein nach oben vorstehendes Kuppelteil (13) einschließt;
ein Rohr (7), das sich von einem Inneren des Tanks (5) über das Kuppelteil (13) zu einem Äußeren des Tanks (5) erstreckt; und
einen Stützstrukturkörper (9), der an das Kuppelteil (13) befestigt ist und einen Abschnitt (7a) des Rohrs (7) stützt, der sich zu der Außenseite des Tanks (5) erstreckt,
**dadurch gekennzeichnet, dass** der Stützstrukturkörper (9) einschließt:
ein Anbringungsteil (9a), das sich an einem untersten Teil des Stützstrukturkörpers (9) befindet und an das Kuppelteil (13) befestigt ist,
ein Montageteil (9b) mit einer flachen plattenartigen Form, das sich an einem obersten Teil des Stützstrukturkörpers (9) befindet und auf dem der Abschnitt (7a) des Rohrs (7), der sich zu der Außenseite des Tanks (5) erstreckt, montiert ist, und
ein Stützteil (9c), das sich zwischen dem Anbringungsteil (9a) und dem Montageteil (9b) befindet, um das Montageteil (9b) in Bezug auf das Anbringungsteil (9a) zu verbinden und zu stützen.

2. Flüssiggaslagerschiff nach Anspruch 1, wobei mindestens ein Abschnitt (9a) des Stützstrukturkörpers (9), der an dem Kuppelteil (13) befestigt ist, aus Tieftemperaturstahl hergestellt ist.

3. Flüssiggaslagerschiff nach Anspruch 1 oder 2, wobei der Stützstrukturkörper (9) mindestens teilweise eine Fachwerkstruktur aufweist.

4. Flüssiggaslagerschiff nach einem der Ansprüche 1 bis 3, wobei das Montageteil (9b) einen Bereich einschließt, der in einer Draufsicht in Bezug auf das Kuppelteil (13) vorsteht.

5. Flüssiggaslagerschiff nach einem der Ansprüche 1 bis 4, wobei das Montageteil (9b) mit einer Einführöffnung (33) ausgebildet ist, über die das Rohr (7) eingeführt wird.

## Revendications

1. Navire de stockage de gaz liquéfié (1) comprenant :
une coque (3) ;
un réservoir (5) installé dans la coque (3) et stockant du gaz liquéfié, le réservoir (5) comportant une partie dôme (13) faisant saillie vers le haut ;
un tuyau (7) s'étendant depuis un intérieur du réservoir (5) à travers la partie dôme (13) jusqu'à l'extérieur du réservoir (5) ; et
un corps de structure de support (9) qui est fixé à la partie dôme (13) et supporte une partie (7a) du tuyau (7) s'étendant vers l'extérieur du réservoir (5),
**caractérisé en ce que** le corps de structure de support (9) comporte :
une partie de raccordement (9a) qui est située dans la partie la plus basse du corps de structure de support (9) et est fixée à la partie dôme (13),
une partie de montage (9b) en forme de plaque plate qui est située dans la partie la plus élevée du corps de structure de support (9) et sur laquelle est montée la partie (7a) du tuyau (7) s'étendant vers l'extérieur du réservoir (5), et
une partie de support (9c) qui est située entre la partie de raccordement (9a) et la partie de montage (9b) pour relier et soutenir la partie de montage (9b) par rapport à la partie de raccordement (9a).

2. Navire de stockage de gaz liquéfié selon la revendication 1, dans lequel au moins une partie (9a) du corps de la structure de support (9) qui est fixée à la partie dôme (13) est constituée d'acier à basse température.

3. Navire de stockage de gaz liquéfié selon la revendication 1 ou 2, dans lequel le corps de structure de support (9) a une structure en treillis au moins en partie.

4. Navire de stockage de gaz liquéfié selon l'une quelconque des revendications 1 à 3, dans lequel la partie de montage (9b) comporte une région faisant saillie par rapport à la partie de dôme (13) dans une vue en plan.

5. Navire de stockage de gaz liquéfié selon l'une quelconque des revendications 1 à 4, dans lequel la partie de montage (9b) est formée avec une ouverture d'insertion (33) à travers laquelle le tuyau (7) est inséré.
